# EUROPÄISCHE PATENTSCHRIFT

(11) **EP 2 423 105 B1**
(45) Veröffentlichungstag und Bekanntmachung des Hinweises auf die Patenterteilung: **27.03.2019**
(21) Anmeldenummer: 11006736.0
(22) Anmeldetag: 17.08.2011
(51) Int. Cl.: B64C 13/04, B64D 45/00, B64C 25/50

(54) **Radsteuerung für ein Luftfahrzeug**
Wheel steering for an aircraft
Commande de roue pour un aéronef

(30) Priorität: 27.08.2010 DE 102010035607
(43) Veröffentlichungstag der Anmeldung: 29.02.2012
(73) Patentinhaber: Liebherr-Aerospace Lindenberg GmbH, 88161 Lindenberg/Allgäu (DE)
(72) Erfinder: Böhme, Perry, 88161 Lindenberg (DE)
(74) Vertreter: Herrmann, Uwe

(56) Entgegenhaltungen:
- DE-A1-102005 008 556
- DE-U1-202005 015 434
- US-A- 3 807 666
- US-A1- 2006 255 555
- US-A1- 2008 011 905

## Beschreibung

Die vorliegende Erfindung betrifft eine Radsteuerung für ein Luftfahrzeug, insbesondere Flugzeug, mittels derer wenigstens ein Rad, insbesondere Bugrad, steuerbar ist und wobei die Radsteuerung vorzugsweise eine Bugradsteuerung bzw. ein Tiller ist, sowie ein Luftfahrzeug, insbesondere Flugzeug, mit wenigstens einer Radsteueru ng.

Die Bugradsteuerung, auch Tiller genannt, wird benutzt, um ein Flugzeug bei geringen Geschwindigkeiten am Boden zu lenken. Beispielsweise benutzt der Pilot des Flugzeugs die Bugradsteuerung, um das Flugzeug vom Stellplatz auf die Startbahn zu lenken sowie weiter zu Beginn des Take-Off-Vorgangs, wenn das Seitenruder noch keine aerodynamische Wirkung hat bzw. durch eine Betätigung des Seitenruders noch keine Richtungsänderung des Flugzeugs herbeiführbar ist.

Moderne Bugradsteuerungen sind als Steer-by-Wire-Systeme ausgeführt, das heißt, dass die am Handrad der Bugradsteuerung anliegende Drehbewegung mittels Sensoren erfasst und in ein elektrisches Signal gewandelt wird. Dieses elektrische Signal wird wiederum durch eine Elektronik ausgewertet und bewirkt somit eine Auslenkung des Bugfahrwerks des Flugzeugs.

Bekannte Bugradsteuerungen weisen darüber hinaus Rückstellsysteme auf, mittels derer das Bugrad in die Null-Grad-Stellung, also üblicherweise die Stellung für Geradeausfahrt zurückgestellt werden kann.
Beispielsweise ist hierzu aus der DE 602 24 108 T2 ein selbstzentrierendes Bugradsteuerungssystem bekannt, bei dem mittels einer exzentrisch angeordneten Torsionsfeder die Bugradsteuerung selbsttätig in eine Null-Grad-Stellung zurückgestellt werden kann, wenn kein Lenkmoment mehr anliegt.
Aus der US 2008/0011905 A1 ist darüber hinaus ein Side-stick-System zur Steuerung des Flugzeugs sowohl am Boden als auch in der Luft bekannt, das ebenfalls über ein Rückstellsystem verfügt. Dieses Rückstellsystem bewirkt, dass bei fehlender Betätigung der Side-stick in eine aufrechte Referenzposition zurückgestellt wird.

Aus der DE 10 2005 008556 A1 ist eine Radsteuerung bekannt, die sämtliche Merkmale aus dem Oberbegriff des Anspruchs 1 offenbart.
Allerdings wäre es wünschenswert, die Ausfallsicherheit einer Bugradsteuerung zu erhöhen und insgesamt eine verbesserte Bedienbarkeit bei zugleich einfacherem Aufbau einer Bugradsteuerung zu ermöglichen.
Es ist daher die Aufgabe der vorliegenden Erfindung, eine Radsteuerung für ein Luftfahrzeug der eingangs genannten Art in vorteilhafter Weise weiterzubilden, insbesondere dahingehend, dass die Ausfallsicherheit einer Radsteuerung erhöht wird und weiter vorzugsweise auch bei Ausfall von Komponenten der Radsteuerung eine selbsttätige Rückstellung sowie sichere Betätigung der Radsteuerung zu ermöglichen.
Diese Aufgabe wird erfindungsgemäß gelöst durch eine Radsteuerung mit den Merkmalen des Anspruchs 1. Danach ist unter anderem vorgesehen, dass eine Radsteuerung für ein Luftfahrzeug, insbesondere Flugzeug, mittels derer wenigstens ein Rad, insbesondere Bugrad, steuerbar ist und wobei die Radsteuerung vorzugsweise eine Bugradsteuerung bzw. ein Tiller ist, wenigstens zwei Sensormittel aufweist, mittels derer jeweils unabhängig voneinander elektronische Signale in Abhängigkeit von der Lenkbewegung zur Auslenkung des Rades erzeugbar sind.

Nach einer vorteilhaften Ausführung umfasst die Radsteuerung zudem wenigstens ein Rückstellmittel, mittels dessen die Radsteuerung in die zentrierte Null-Position rückstellbar ist, wobei das Rückstellmittel wenigstens zwei Federmittel aufweist, mittels derer jeweils unabhängig voneinander eine Rückstellung der Radsteuerung in die zentrierte Null-Position bewirkbar ist.

Nach einer weiteren vorteilhaften Ausführung umfasst die Radsteuerung wenigstens zwei Schaltermittel aufweist, mittels derer jeweils unabhängig voneinander die Radsteuerung aktivierbar ist.

Nach einer weiteren vorteilhaften Ausführung umfasst die Radsteuerung wenigstens zwei Druckfedermittel aufweist, mittels derer jeweils unabhängig voneinander ein Betätigungsmittel rückstellbar ist, wobei mittels des Betätigungsmittels die Schaltermittel betätigbar sind

Die Radsteuerung ist vorteilhaft eine Steer-by-Wire-Radsteuerung, mittels derer beispielsweise das Bugrad eines Flugzeugs gesteuert werden kann.

Dadurch ergibt sich der Vorteil, dass durch einen redundanten Aufbau hinsichtlich der essentiellen Komponenten der Radsteuerung eine wesentlich höhere Zuverlässigkeit der Radsteuerung erreicht werden kann. Beispielsweise kann in einem Fall, in dem ein Federmittel des Rückstellmittels versagt, z. B. durch Bruch, dennoch eine Rückstellung der Radsteuerung in die zentrierte Null-Position bewirkt werden, da dies bereits durch das andere, zweite Federmittel bewirkt werden kann.

Auch ein Ausfall eines Sensormittels führt nicht zum Ausfall der gesamten Radsteuerung, da mittels des anderen, zweiten Sensormittels, weiterhin die Lenkbewegungen erfasst und in elektronische Signale zur Ansteuerung des Rades umgewandelt werden können. Das Sensormittel kann beispielsweise ein Tandem-Sensor sein oder einen Tandem-Sensor umfassen.

Ein Ausfall eines der Schaltermittel führt ebenfalls nicht zum Ausfall der gesamten Radsteuerung, da mittels des zweiten Schaltermittels weiterhin eine Aktivierung der Radsteuerung, aber auch eine Deaktivierung möglich ist.

Üblicherweise wird mittels eines Betätigungsmittels auf die Schaltermittel eingewirkt, um die Radsteuerung zu aktivieren. Zur Rückstellung des Betätigungsmittels sind nunmehr zwei Druckfedermittel vorgesehen, die jeweils unabhängig voneinander das Betätigungsmittel rückstellen können. Hierdurch wird sichergestellt, dass auch bei Versagen eines der beiden Druckfedermittel weiterhin eine zuverlässige Rückstellung des Betätigungsmittels ermöglicht ist. Eine sichere Aktivierung bzw. Deaktivierung der Radsteuerung kann hierdurch erreicht werden. Es wird des Weiteren eine haptische Rückmeldung vorteilhafterweise mittels eines Endlosfedermittels für den Piloten erzeugt, die einen Druckpunkt im Zusammenhang mit der Betätigung der Schaltermittel für die Aktivierung der Radsteuerung spürbar macht.

Des Weiteren kann vorgesehen sein, dass die Radsteuerung wenigstens ein Lenkrad oder Handrad aufweist, wobei mittels einer Eindrückbewegung des Lenkrades oder Handrades oder eines Teiles des Lenkrades oder Handrades die Radsteuerung aktivierbar und/oder deaktivierbar ist. Denkbar ist beispielsweise, dass die Radmitte oder Radnabe bzw. der Kopf der Handradachse oder Lenkradachse oder das Handradzentrum oder Lenkradzentrum zumindest teilweise eindrückbar ausgeführt ist und dieser bzw. dieses zur Aktivierung der Radsteuerung eingedrückt werden muss. Ein Loslassen führt dementsprechend zu einer Deaktivierung der Radsteuerung.

Darüber hinaus ist denkbar, dass das Federmittel des Rückstellmittels eine vorgespannt eingebaute Schenkelfeder ist und/oder umfasst.

Weiter ist denkbar, dass die Federmittel des Rückstellmittels konzentrisch zur Lenkungsachse des Lenkrades oder Handrades der Radsteuerung angeordnet sind.

Außerdem ist möglich, dass ein Dämpfungsmittel vorgesehen ist, mittels dessen die Rückstellbewegung dämpfbar ist, insbesondere derart dämpfbar ist, dass ein Überschlagen über den Nullpunkt verhinderbar und/oder ein kontrolliertes Zurückkehren in die zentrierte Nullposition bewirkbar ist. Die Radsteuerung verfügt somit mit dem Dämpfungsmittel über eine weitere Sicherungseinrichtung, so dass die Bedienungssicherheit der Radsteuerung weiter erhöht werden kann. Das Dämpfungsmittel kann beispielsweise ein Rotationsdämpfer sein. Ein eventuelles Überschlagen über den Nullpunkt kann hiermit vorteilhaft verhindert werden, so dass auch bei einem Loslassen des Lenkrades oder Handrades der Radsteuerung eine kontrollierte und langsame Bewegung in die zentrierte Nullposition erfolgt, und zwar sowohl durch das Lenk- bzw. Handrad als auch durch das angesteuerte Rad, insbesondere Bugrad.

Es weiter möglich, dass ein Endlosfedermittel vorgesehen ist, wobei mittels des Endlosfedermittels eine haptische Rückmeldung erzeugbar ist. Das Endlosfedermittel kann eine Endlosfeder sein. Vorzugsweise ist eine haptische Rückmeldung dahingehend erzeugbar, dass die haptische Rückmeldung einen Druckpunkt im Zusammenhang mit der Betätigung der Schaltermittel für die Aktivierung der Radsteuerung spürbar macht. Beispielsweise kann vorgesehen sein, dass das Endlosfedermittel im unteren Bereich, insbesondere im unteren Drittel des Betätigungsmittels angeordnet ist.

Nach der Erfindung ist vorgesehen, dass das Sensormittel mittels wenigstens eines auf dem Sensormittel montierten und vorgespannten Zahnrades antreibbar ist oder angetrieben wird, wobei das Zahnrad vorzugsweise mit einer Verzahnung auf der Hauptwelle der Radsteuerung kämmt. Dadurch kann vorteilhafterweise eine Minimierung des Zahnradspieles zwischen den Zahnrädern des Sensors und der Hauptwelle, also beispielsweise der Lenk- bzw. Handradwelle herbeigeführt werden.

Des Weiteren kann vorgesehen sein, dass die Druckfedermittel konzentrisch zur Lenkungsachse des Lenkrades oder Handrades der Radsteuerung angeordnet sind. Beispielsweise kann vorgesehen sein, dass die Lenkwelle des Lenk- bzw. Handrades eine Hohlwelle ist, in der die Druckfedermittel eingesetzt und geführt sind.

Ferner ist denkbar, dass das mittels der Druckfedermittel rückstellbare Betätigungsmittel ein Druckstößel ist, mittels dessen die Schalter betätigbar sind und wobei der Druckstößel durch eine Eindrückbewegung des Lenkrades oder Handrades oder eines Teiles des Lenkrades oder Handrades der Radsteuerung bewegbar ist.

Darüber hinaus betrifft die vorliegende Erfindung ein Luftfahrzeug mit den Merkmalen des Anspruchs 10. Danach ist vorgesehen, dass ein Luftfahrzeug, insbesondere Flugzeug, wenigstens eine Radsteuerung nach einem der Ansprüche 1 bis 9 aufweist.

Weitere Einzelheiten und Vorteile der Erfindung sollen nun anhand eines in der Zeichnung dargestellten Ausführungsbeispiels näher erläutert werden.

Es zeigen:
- Figur 1:: eine Seitenansicht der Bugradsteuerung;
- Figur 2:: eine Detaildarstellung des Schnittes B-B gemäß Figur 1 durch die Bugradsteuerung; und
- Figur 3:: eine weitere Detaildarstellung des Schnittes B-B gemäß Figur 1 durch die Bugradsteuerung.

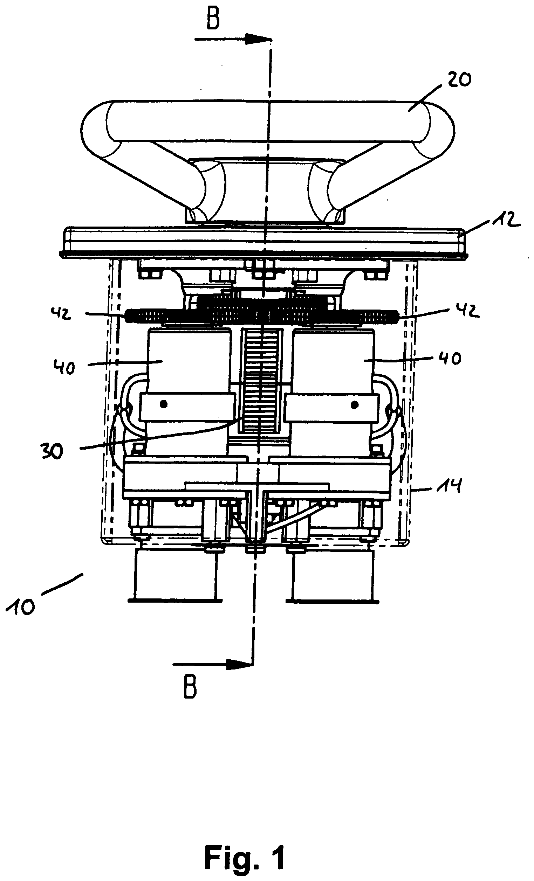

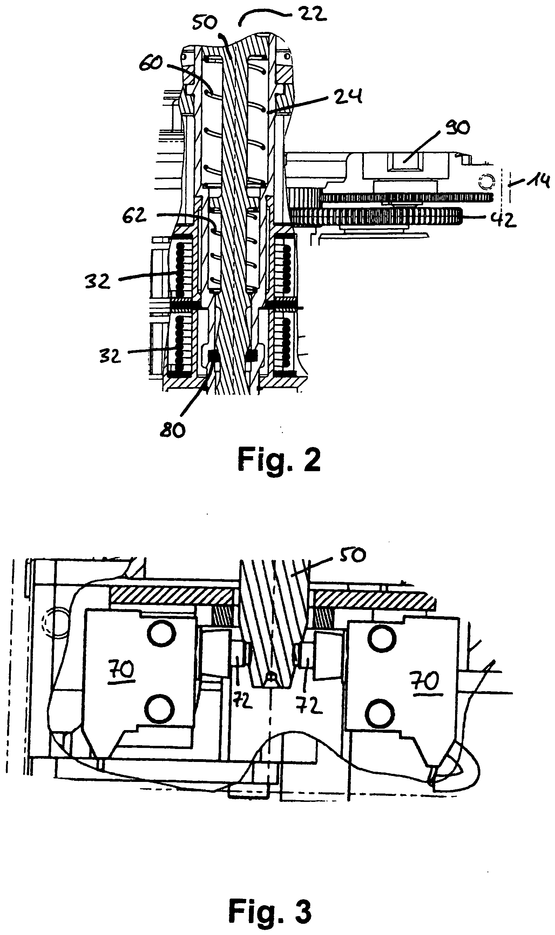

Figur 1 zeigt in einer Seitenansicht als Ausführungsbeispiel der erfindungsgemäßen Radsteuerung 10 eine Bugradsteuerung 10 für ein Luftfahrzeug, hier für ein Flugzeug. Dabei kann die Bugradsteuerung 10 durch ein Eindrücken der Aktivierungsfläche 22 des Handrades 20 aktiviert werden, wobei die Aktivierungsfläche 22 (vgl. Figur 2) durch den Kopf des Druckstößels 50 ausgebildet ist.

Die Bugradsteuerung 10 ist dabei modular aufgebaut und im Sinne einer schnellen und sicheren Austauschbarkeit in einem Gehäuse 14 gekapselt, das nach außen hin sichtbar durch eine Deckplatte 12, aus der das Handrad 20 herausragt und relativ zu dieser verdrehbar ist, abgeschlossen wird.

Das durchsichtig dargestellte Gehäuse 14 ermöglicht einen Blick auf das Rückstellmittel 30, das zwei Schenkelfedern 32 umfasst. Die Schenkelfedern 32, die vorgespannt eingebaut sind, stellen unabhängig voneinander eine Rückstellung des Handrades 20 nach einem Loslassen in die zentrierte Nullposition sicher. Um ein eventuelles Überschlagen über den Nullpunkt zu verhindern, verfügt die Bugradsteuerung 10 über wenigstens einen Rotationsdämpfer 90, der bei Loslassen des Handrades 20 das Handrad 20 und auch das Bugrad kontrolliert und langsam in die zentrierte Nullposition bewegt. Der Rotationsdämpfer 90 weist hierzu insbesondere ein Kopplungsrad auf, das mittelbar oder unmittelbar mit der Achse des Handrades 20 in Verbindung steht.

Grundsätzlich ist bereits ein Rotationsdämpfer 90 ausreichend, um ein eventuelles Überschlagen über den Nullpunkt zu verhindern. Auch dies dient einer Erhöhung der Betriebssicherheit der Bugradsteuerung 10, wobei es zusätzlich möglich ist, den Rotationsdämpfer 90 redundant auszuführen.

Figur 2 zeigt den Schnitt B-B, wie dieser in Figur 2 eingezeichnet ist und zwar hier einen Ausschnitt betreffend die Anordnung der Federn. Das Handrad 20 ist mit einer Hohlwelle 24 verbunden, in der der Druckstößel 50 geführt ist. Der Druckstößel 50 bildet kopfseitig die mittels Bezugszeichen angedeutete Aktivierungsfläche 22 für die Bugradsteuerung 10 aus. In der Hohlwelle 24 sind ferner zwei Druckfedern 60 und 62 geführt und konzentrisch zur Drehachse des Lenkrades 20 angeordnet.

Konzentrisch zur Drehachse des Lenkrades 20 verläuft auch die Längsachse des Druckstößels 50. Am unteren Ende des Druckstößels 50, der zwar eindrückbar, aber drehfest in der Hohlwelle 24 geführt ist, sind die beiden Mikroschalter 70 angeordnet, wie dies in Figur 3 gezeigt ist. Mittels des Druckstößels 50 werden zwei Miniaturschalter 70 bzw. Mikroschalter 70 betätigt. Zur Betätigung des Druckstößels 50 und damit zur Betätigung der beiden Miniaturschalter 70 müssen die beiden Druckfedern 60 und 62 komprimiert werden, wobei die Vorspannung einer der beiden Druckfedern 60 bzw. 62 bereits ausreichend ist, um den Druckstößel 50 in seine Ausgangsposition zurückzubewegen. Diese Ausgangsposition ist gleichbedeutend mit einer Nicht-Betätigung der beiden Miniaturschalter 70 und damit mit einer Deaktivierung der Bugradsteuerung 10. Erst durch ein Eindrücken der Aktivierungsfläche 22 und damit durch ein Betätigen des Druckstößels 50 werden die beiden Miniaturschalter 70 mittels der Stößel 72 der Miniaturschalter 70 ausgelöst und hierdurch die Bugradsteuerung 10 aktiviert. Grundsätzlich ist es dabei bereits ausreichend, wenn nur einer der beiden Miniaturschalter 70 aktiviert wird. Ein Ausfall eines der beiden Miniaturschalter 70 bleibt somit ohne Folgen. Auch ein Bruch einer der beiden Druckfedern 60 bzw. 62 bleibt ohne Folgen, da bereits die Federkraft einer der beiden Druckfedern 60 bzw. 62 ausreichend ist, um den Druckstößel 50 in seine Ausgangsposition zurückzustellen.

Eine haptische Rückmeldung für den Piloten wird vorteilhafterweise mittels einer im unteren Drittel des Druckstößels 50 angeordneten Endlosfeder 80 erzeugt, die einen Druckpunkt im Zusammenhang mit der Betätigung der Miniaturschalter 70 für die Aktivierung der Radsteuerung 10 spürbar macht.

Neben der Aufnahme des Druckstößels 50 sind die beiden Sensoren 40 angeordnet, mittels derer die Lenkbewegungen erfasst werden. Eine Auslenkung des Handrades 20 durch den Piloten, also eine Lenkbewegung, wird von den beiden Sensoren 40 erfasst, die sodann entsprechende elektrische Signale generieren.

Mittels jeweils auf dem Sensor 40 montierter und vorgespannter Zahnräder 42 kann eine entsprechende Lenkbewegung erfasst werden. Die hierdurch generierten Signale werden wiederum durch eine Elektronik ausgewertet und bewirken sodann eine entsprechende Auslenkung des Bugfahrwerkes. Auch hier führt vorteilhafterweise der Ausfall eines der beiden Sensoren 40 nicht zum Ausfall der Bugradsteuerung 10, da die Sensoren 40 redundant ausgeführt sind und das mittels eines der beiden Sensoren 40 erhaltene Signal ausreichend ist, um eine Auslenkung des Bugfahrwerkes entsprechend der mittels des Handrades 20 vorgegebenen Lenkbewegung zu bewirken.

## Patentansprüche

1. Radsteuerung (10) für ein Luftfahrzeug, insbesondere Flugzeug, mittels derer ein Rad, insbesondere Bugrad, steuerbar ist, wobei die Radsteuerung vorzugsweise eine Bugradsteuerung bzw. ein Tiller ist, umfassend:
zwei Sensormittel (40), mittels derer jeweils unabhängig voneinander elektronische Signale in Abhängigkeit von der Lenkbewegung zur Auslenkung des Rades erzeugbar sind,
**dadurch gekennzeichnet, dass**
das Sensormittel (40) mittels eines auf dem Sensormittel montierten und vorgespannten Zahnrades (42) antreibbar ist oder angetrieben wird, wobei
das Zahnrad (42) vorzugsweise mit einer Verzahnung auf der Hauptwelle der Radsteuerung (10) kämmt.

2. Radsteuerung (10) nach Anspruch 1, ferner mit einem Rückstellmittel (30), mittels dessen die Radsteuerung in die zentrierte Nullposition rückstellbar ist, wobei das Rückstellmittel (30) wenigstens zwei Federmittel (32) aufweist, mittels derer jeweils unabhängig voneinander eine Rückstellung der Radsteuerung in die zentrierte Nullposition bewirkbar ist.

3. Radsteuerung (10) nach einem der vorhergehenden Ansprüche, ferner mit wenigstens zwei Schaltermitteln (70), mittels derer jeweils unabhängig voneinander die Radsteuerung aktivierbar ist.

4. Radsteuerung (10) nach einem der vorhergehenden Ansprüche, ferner mit wenigstens zwei Druckfedermitteln (60, 62), mittels derer jeweils unabhängig voneinander ein Betätigungsmittel (50) rückstellbar ist, wobei mittels des Betätigungsmittels (50) die Schaltermittel (70) betätigbar sind

5. Radsteuerung (10) nach Anspruch 1, **dadurch gekennzeichnet, dass** die Radsteuerung (10) wenigstens ein Lenkrad (20) oder Handrad (20) aufweist, wobei mittels einer Eindrückbewegung des Lenkrades (20) oder Handrades (20) oder eines Teiles des Lenkrades (20) oder Handrades (20) die Radsteuerung (10) aktivierbar und/oder deaktivierbar ist.

6. Radsteuerung (10) nach einem der vorhergehenden Ansprüche, **dadurch gekennzeichnet, dass** das Federmittel (32) des Rückstellmittels (30) eine vorgespannt eingebaute Schenkelfeder ist und/oder umfasst.

7. Radsteuerung (10) nach einem der vorhergehenden Ansprüche, **dadurch gekennzeichnet, dass** die Federmittel (32) des Rückstellmittels (30) konzentrisch zur Lenkungsachse des Lenkrades (20) oder Handrades (20) der Radsteuerung (10) angeordnet sind.

8. Radsteuerung (10) nach einem der vorhergehenden Ansprüche, **dadurch gekennzeichnet, dass** wenigstens ein Dämpfungsmittel (90) vorgesehen ist, mittels dessen die Rückstellbewegung dämpfbar ist, insbesondere derart dämpfbar ist, dass ein Überschlagen über den Nullpunkt verhinderbar und/oder ein kontrolliertes Zurückkehren in die zentrierte Nullposition bewirkbar ist.

9. Radsteuerung (10) nach einem der vorhergehenden Ansprüche, **dadurch gekennzeichnet, dass** ein Endlosfedermittel (80), insbesondere eine Endlosfeder, vorgesehen ist, wobei mittels des Endlosfedermittels (80) eine haptische Rückmeldung erzeugbar ist, vorzugsweise dahingehend, dass die haptische Rückmeldung einen Druckpunkt im Zusammenhang mit der Betätigung der Schaltermittel (70) für die Aktivierung der Radsteuerung (10) spürbar macht.

10. Radsteuerung (10) nach einem der vorhergehenden Ansprüche, **dadurch gekennzeichnet, dass** die Druckfedermittel (60, 62) konzentrisch zur Lenkungsachse des Lenkrades (20) oder Handrades (20) der Radsteuerung (10) angeordnet sind.

11. Radsteuerung (10) nach einem der vorhergehenden Ansprüche, **dadurch gekennzeichnet, dass** das mittels der Druckfedermittel (60, 62) rückstellbare Betätigungsmittel (50) ein Druckstößel (50) ist, mittels dessen die Schaltermittel (70) betätigbar sind, und wobei der Druckstößel (50) durch eine Eindrückbewegung des Lenkrades (20) oder Handrades (20) oder eines Teiles des Lenkrades (20) oder Handrades (20) der Radsteuerung (10) bewegbar ist.

12. Luftfahrzeug, insbesondere Flugzeug, mit wenigstens einer Radsteuerung (10) nach einem der vorhergehenden Ansprüche.

## Claims

1. A wheel controller (10) for an aircraft, in particular airplane, by means of which at least one wheel, in particular nose wheel, can be controlled, wherein the wheel controller preferably is a nose wheel controller or a tiller, comprising:
at least two sensor means (40) by means of which electronic signals each can be generated independent of each other for deflecting the wheel in dependence on the steering movement,
**characterized in that**
the sensor means (40) can be or is driven by means of a gearwheel (42) mounted and pre-tensioned on the sensor means, wherein
the gearwheel (42) preferably meshes with a toothing on the main shaft of the wheel controller (10)

2. The wheel controller (10) according to claim 1, further comprising a resetting means (30) by means of which the wheel controller can be reset into the centered zero position, wherein the resetting means (30) includes at least two spring means (32) by means of which a reset of the wheel controller into the centered zero position each can be effected independent of each other.

3. The wheel controller (10) according to one of the preceding claims, further comprising at least two switch means (70) by means of which the wheel controller each can be activated independent of each other.

4. The wheel controller (10) according to one of the preceding claims, further comprising at least two compression spring means (60, 62) by means of which an actuating means (50) each can be reset independent of each other, wherein the switch means (70) can be actuated by means of the actuating means (50).

5. The wheel controller (10) according to claim 1, **characterized in that** the wheel controller (10) includes at least one steering wheel (20) or hand wheel (20), wherein by means of a press-in movement of the steering wheel (20) or hand wheel (20) or a part of the steering wheel (20) or hand wheel (20) the wheel controller (10) can be activated and/or deactivated.

6. The wheel controller (10) according to one of the preceding claims, **characterized in that** the spring means (32) of the resetting means (30) is and/or comprises a leg spring installed pretensioned.

7. The wheel controller (10) according to any of the preceding claims, **characterized in that** the spring means (32) of the resetting means (30) are arranged concentrically with respect to the steering axle of the steering wheel (20) or hand wheel (20) of the wheel controller (10).

8. The wheel controller (10) according to any of the preceding claims, **characterized in that** at least one damping means (90) is provided, by means of which the resetting movement can be attenuated, in particular such that a roll-over over the zero point can be prevented and/or a controlled return into the centered zero position can be effected.

9. The wheel controller (10) according to any of the preceding claims, **characterized in that** an endless spring means (80), in particular an endless spring, is provided, wherein by means of the endless spring means (80) a haptic feedback can be generated, preferably to the effect that the haptic feedback makes a pressure point noticeable in connection with the actuation of the switch means (70) for activating the wheel controller (10).

10. The wheel controller (10) according to any of the preceding claims, **characterized in that** the compression spring means (60, 62) are arranged concentrically with respect to the steering axle of the steering wheel (20) or hand wheel (20) of the wheel controller (10).

11. The wheel controller (10) according to any of the preceding claims, **characterized in that** the actuating means (50) to be reset by means of the compression spring means (60, 62) is a pressure tappet (50) by means of which the switch means (70) can be actuated, and wherein the pressure tappet (50) is movable by a press-in movement of the steering wheel (20) or hand wheel (20) or a part of the steering wheel (20) or hand wheel (20) of the wheel controller (10).

12. An aircraft, in particular airplane, with at least one wheel controller (10) according to any of the preceding claims.

## Revendications

1. Commande de roue (10) pour un aéronef, en particulier un avion, au moyen de laquelle une roue, en particulier une roue avant d'atterrissage, peut être commandée, la commande de roue étant de préférence une commande de roue avant d'atterrissage ou un tiller, comprenant :
deux moyens de capteur (40), au moyen desquels, respectivement indépendamment l'un de l'autre, des signaux électroniques peuvent être générés en fonction du mouvement de direction pour la déviation de la roue,
**caractérisée en ce que**
le moyen de capteur (40) peut être ou est entraîné au moyen d'une roue dentée (42) montée et précontrainte sur le moyen de capteur,
la roue dentée (42) s'engrenant de préférence avec un endentement sur l'arbre principal de la commande de roue (10).

2. Commande de roue (10) selon la revendication 1, comprenant en outre un moyen de rappel (30), au moyen duquel la commande de roue peut être repositionnée dans la position neutre centrée, le moyen de rappel (30) comportant au moins deux moyens formant ressorts (32), au moyen desquels, respectivement indépendamment l'un de l'autre, un repositionnement de la commande de roue dans la position neutre centrée peut être effectuée.

3. Commande de roue (10) selon l'une des revendications précédentes, comprenant en outre au moins deux moyens de commutation (70), au moyen desquels, respectivement indépendamment l'un de l'autre, la commande de roue peut être activée.

4. Commande de roue (10) selon l'une des revendications précédentes, comprenant en outre au moins deux moyens formant ressorts de pression (60, 62), au moyen desquels, respectivement indépendamment l'un de l'autre, un moyen d'actionnement (50) peut être repositionné, les moyens de commutation (70) pouvant être actionnés à l'aide du moyen d'actionnement (50).

5. Commande de roue (10) selon la revendication 1, **caractérisée en ce que** la commande de roue (10) comporte au moins un volant (20) ou une roue à main (20), la commande de roue (10) pouvant être activée et/ou désactivée au moyen d'un mouvement d'enfoncement du volant (20) ou de la roue à main (20) ou d'une partie du volant (20) ou de la roue à main (20).

6. Commande de roue (10) selon l'une des revendications précédentes, **caractérisée en ce que** le moyen formant ressort (32) du moyen de rappel (30) est et/ou comprend un ressort à branches monté de manière précontrainte.

7. Commande de roue (10) selon l'une des revendications précédentes, **caractérisée en ce que** les moyens formant ressorts (32) du moyen de rappel (30) sont disposés de manière concentrique par rapport à l'axe de direction du volant (20) ou de la roue à main (20) de la commande de roue (10).

8. Commande de roue (10) selon l'une des revendications précédentes, **caractérisée en ce qu'**au moins un moyen d'amortissement (90) est prévu, au moyen duquel le mouvement de rappel peut être amorti, en particulier amorti de telle manière qu'un passage au-delà du point neutre peut être empêché et/ou un retour contrôlé dans la position neutre centrée peut être effectué.

9. Commande de roue (10) selon l'une des revendications précédentes, **caractérisée en ce qu'**un moyen formant ressort infini (80), en particulier un ressort infini, est prévu, un feedback haptique pouvant être généré à l'aide du moyen formant ressort infini (80), de préférence de telle sorte que le feedback haptique rend perceptible un point de pression en rapport avec l'actionnement des moyens de commutation (70) pour l'activation de la commande de roue (10).

10. Commande de roue (10) selon l'une des revendications précédentes, **caractérisée en ce que** les moyens formant ressorts de pression (60, 62) sont disposés de manière concentrique par rapport à l'axe de direction du guidon (20) ou du volant (20) de la commande de roue (10).

11. Commande de roue (10) selon l'une des revendications précédentes, **caractérisée en ce que** le moyen d'actionnement (50) pouvant être repositionné à l'aide des moyens formant ressorts de pression (60, 62) est un poussoir (50), au moyen duquel les moyens de commutation (70) peuvent être actionnés, et le piston (50) pouvant être déplacé par un mouvement d'enfoncement du volant (20) ou de la roué à main (20) ou d'une partie du volant (20) ou de la roue à main (20) de la commande de roue (10).

12. Aéronef, en particulier avion, comprenant au moins une commande de roue (10) selon l'une des revendications précédentes.
